# FASCICULE DE BREVET EUROPEEN

(11) **EP 1 541 464 B1**
(45) Date de publication et mention de la délivrance du brevet: **05.03.2008**
(21) Numéro de dépôt: 04106374.4
(22) Date de dépôt: 07.12.2004
(51) Int. Cl.: B64C 1/00, B64C 1/12, F16B 19/04

(54) **Dispositif d'assemblage par rivetage de plusieurs éléments et procédé d'assemblage de panneaux notamment de fuselage d'aéronef à l'aide dudit dispositif**
Nietverbindung mehrerer Elemente und Verfahren zum Verbinden von Schalen, insbesondere eines Flugzeugrumpfes, mit Hilfe dieser Nietverbindung
Riveting assembly of several elements and method of joining panels, preferably of an aircraft fuselage, using said riveting assembly

(30) Priorité: 10.12.2003 FR 0314482
(43) Date de publication de la demande: 15.06.2005
(73) Titulaire: AIRBUS France, 31060 Toulouse (FR)
(72) Inventeur: Meyer, Cédric, F-31470 Fonsorbes (FR)
(74) Mandataire: Schmit, Christian Norbert Marie

(56) Documents cités:
- DE-C- 19 534 031
- US-A1- 2001 054 228
- DATABASE WPI Section PQ, Week 199429 Derwent Publications Ltd., London, GB; Class Q61, AN 1994-239928 XP002314040 & SU 1 812 351 A1 (KAZAN ENGINES PRODN ASSOC) 30 avril 1993 (1993-04-30)
- DATABASE WPI Section PQ, Week 198212 Derwent Publications Ltd., London, GB; Class P52, AN 1982-D3246E XP002314041 & SU 838 115 B (LYUBARETS F M) 20 juin 1981 (1981-06-20)

## Description

La présente invention se rapporte d'une manière générale à l'assemblage par rivetage de plusieurs éléments et plus particulièrement à l'assemblage de panneaux de relativement grandes dimensions constitués de tôles métalliques de faible épaisseur, devant réaliser le fuselage d'aéronefs.

Le fuselage d'un aéronef est constitué de tronçons tubulaires aboutés les uns les autres suivant des lignes de jonction appelées coutures orbitales définissant des plans perpendiculaires à l'axe longitudinal du fuselage, lesdits tronçons étant eux-mêmes généralement constitués chacun de plusieurs panneaux assemblés entre eux le long de lignes de jonction appelées coutures longitudinales correspondant à des génératrices dudit tronçon.

Ces coutures, orbitales et longitudinales, sont des zones de fragilité du fuselage qu'il convient de renforcer pour résister aux fortes sollicitations auxquelles le fuselage est soumis en vol, résultant des actions conjuguées de la pesanteur, des forces aérodynamiques, des forces de propulsion et également de la pressurisation de la cabine de l'aéronef.

C'est ainsi que généralement les coutures longitudinales du fuselage sont réalisées en disposant des bords de deux panneaux à assembler en recouvrement, la solidarisation étant faite à l'aide habituellement d'au moins deux rangées de rivets de fixation dans la zone de recouvrement des deux panneaux.

Les coutures orbitales, elles, sont généralement réalisées à l'aide d'une virole rapportée sur la paroi interne du fuselage, au moins deux rangées parallèles de rivets de fixation solidarisant chaque bord de tronçon avec ladite virole.

Généralement, un raidisseur circonférentiel à section en T, plus communément appelé cadre, est disposé sur la face de ladite virole opposée à la face en contact avec les bords de tronçons. Ce cadre est solidarisé avec la virole et chaque tronçon à l'aide de l'une des deux rangées parallèles de rivets susdites.

Le document SU 1 812 351 décrit un dispositif d'assemblage de plusieurs éléments à l'aide de rivets, dont les fûts présentent une section ovale.

Le but de l'invention est de perfectionner ces modes d'assemblages en améliorant leurs performances, notamment la résistance à la fatigue ainsi que leurs coûts de mise en oeuvre.

A cet effet, l'invention a pour objet, d'une manière générale, un dispositif d'assemblage comprenant plusieurs éléments assemblés par rivetage caractérisé en ce qu'il comprend des rivets dont le fût présente une section elliptique, reçus et rivetés dans des trous de section elliptique correspondant à celle dudit fût, ménagés dans lesdits éléments à assembler.

Un tel dispositif d'assemblage présente l'avantage, par une meilleure canalisation des flux d'efforts se propageant dans le plan des éléments assemblés parallèlement au grand axe des trous elliptiques, de réduire sensiblement les surcontraintes localisées sur les deux flancs opposés de part et d'autre du grand axe desdits trous elliptiques.

On améliore ainsi la résistance à la fatigue de l'assemblage en évitant, par la réduction de contraintes sur les flancs internes des trous, l'apparition de fissures susceptibles d'entraîner des ruptures dommageables.

La réduction optimale de contrainte est obtenue en dimensionnant le grand axe et le petit axe de la section elliptique des rivets et des trous dans un rapport de l'ordre de 2, entraînant une réduction du coefficient de concentration de contraintes de l'ordre de 33% et présentant l'avantage de permettre la suppression d'une rangée de rivets de fixation lorsqu'il en est prévu trois rangées dans les assemblages conventionnels.

L'invention vise également une application d'un tel dispositif d'assemblage à la réalisation du fuselage d'un aéronef et, à cet effet, a pour objet un procédé d'assemblage de panneaux de tôles de relativement grandes dimensions et faible épaisseur pour constituer le fuselage d'un aéronef, lequel fuselage comprend des tronçons annulaires aboutés suivant des coutures orbitales, lesdits tronçons étant constitués chacun d'un ou plusieurs panneaux aboutés suivant des coutures longitudinales, ledit procédé étant caractérisé en ce que, d'une part, sur chaque tronçon la ou les coutures longitudinales sont réalisées en disposant des bords des deux panneaux à assembler en recouvrement, l'assemblage des parties en recouvrement étant réalisé par perçage dans lesdites parties de trous de section elliptique dont le grand axe est orthogonal à la couture longitudinale, puis rivetage desdites parties à l'aide de rivets à fût de section elliptique correspondant à celle desdits trous et, d'autre part, chaque couture orbitale de jonction deux à deux desdits tronçons est réalisée à l'aide d'une virole rapportée sur la paroi interne du fuselage, en regard des parties aboutées des tronçons, l'assemblage de la virole et des tronçons en regard étant réalisé par rivetage, ledit rivetage étant, au moins dans deux zones opposées des coutures orbitales à cheval sur les génératrices supérieure et inférieure du fuselage, effectué par perçage de trous de section elliptique de grand axe parallèle auxdites génératrices et mise en place de rivets à fût à section elliptique correspondant à celle desdits trous.

Le fait de réaliser le long des coutures longitudinales des tronçons de fuselage des trous de fixation à section elliptique dont le grand axe est orthogonal auxdites coutures permet de mieux reprendre des efforts de traction générés en particulier par la pressurisation de la cabine, en réduisant la concentration de contrainte sur les flancs des trous opposés de part et d'autre du grand axe, dont les surfaces sont ainsi agrandies par l'allongement des trous résultant de l'ovalisation.

Pour ce qui concerne les coutures orbitales, les zones les plus sollicitées sont celles à hauteur des génératrices supérieure et inférieure du fuselage, où les contraintes en traction/compression sont maximales.

Le fait de réaliser dans ces deux zones des coutures orbitales des trous de fixation à section elliptique dont le grand axe est parallèle auxdites génératrices permet de réduire, de la même manière que pour les coutures longitudinales, la concentration de contrainte sur les flancs des trous les plus sollicités.

Avantageusement, le rapport entre le grand axe et le petit axe des sections des trous de fixation et de rivets correspondants est de l'ordre de deux, constituant un compromis optimal entre une section purement circulaire et une ovalisation excessive et permettant de réduire de l'ordre de 33% le coefficient de concentration de contraintes Kₜ.

L'étendue des zones des coutures orbitales d'implantation des rivets elliptiques, de part et d'autre desdites génératrices supérieure et inférieure, est variable. Il n'est pas nécessaire qu'elles s'étendent très loin en direction des génératrices à mi-chemin entre les génératrices supérieure et inférieure, lesquelles correspondent aux fibres neutres de la poutre théorique constituée par le fuselage. Les efforts de traction ou de compression générés parallèlement à l'axe du fuselage vont en effet en décroissant depuis les génératrices supérieure et inférieure jusqu'à devenir nulles au droit desdites génératrices « neutres » où les trous de fixation peuvent être, ainsi que dans les zones adjacentes, circulaires.

Par ailleurs, tous types de rivets peuvent être utilisés conformément à l'invention, dans la mesure où ils peuvent être constitués avec un fût elliptique. De préférence, on utilisera des rivets du type connu sécable, à fût elliptique prolongé par une partie de diamètre circulaire réduit, à redans ou filets et fractionnable, permettant la mise en place d'une bague de fixation et retenue du rivet, à la manière connue.

D'autres caractéristiques et avantages ressortiront de la description qui va suivre d'un mode de mise en oeuvre du procédé de l'invention, description donnée à titre d'exemple uniquement et en regard des dessins annexés sur lesquels :
- figures 1 a, 1b, 1c sont respectivement une vue d'extrémité, côté tête, d'un rivet elliptique selon l'invention, une vue latérale du rivet dans le plan du grand axe et une vue latérale dans le plan du petit axe ;
- figure 2 est une vue en coupe axiale d'un assemblage de deux tôles par exemple métalliques à l'aide du rivet des figures 1 a à 1c ;
- figure 3 est une vue en coupe suivant la ligne III-III de l'assemblage de la figure 2 ;
- figure 4 est un diagramme montrant l'évolution du rapport K entre la valeur du coefficient de concentration de contraintes Kₜ pour un trou elliptique et la valeur de ce même coefficient mais pour un trou circulaire, en fonction de l'évolution de la section des trous de fixation du rivet ;
- figure 5 est une vue schématique en perspective de deux tronçons de fuselage d'aéronef à assembler ;
- figure 6 est une vue agrandie partielle d'une extrémité de tronçon ;
- figure 7 est une vue en coupe partielle d'un tronçon, à hauteur d'une couture longitudinale;
- figure 8 est une vue de gauche de l'assemblage de la figure 7 ;
- figure 9 est une vue en coupe partielle à hauteur d'une couture orbitale conventionnelle de jonction de deux tronçons ;
- figure 10 est une vue partielle de l'assemblage de deux tronçons conformément à l'invention, dans la zone de la couture orbitale correspondant à la génératrice supérieure du fuselage.

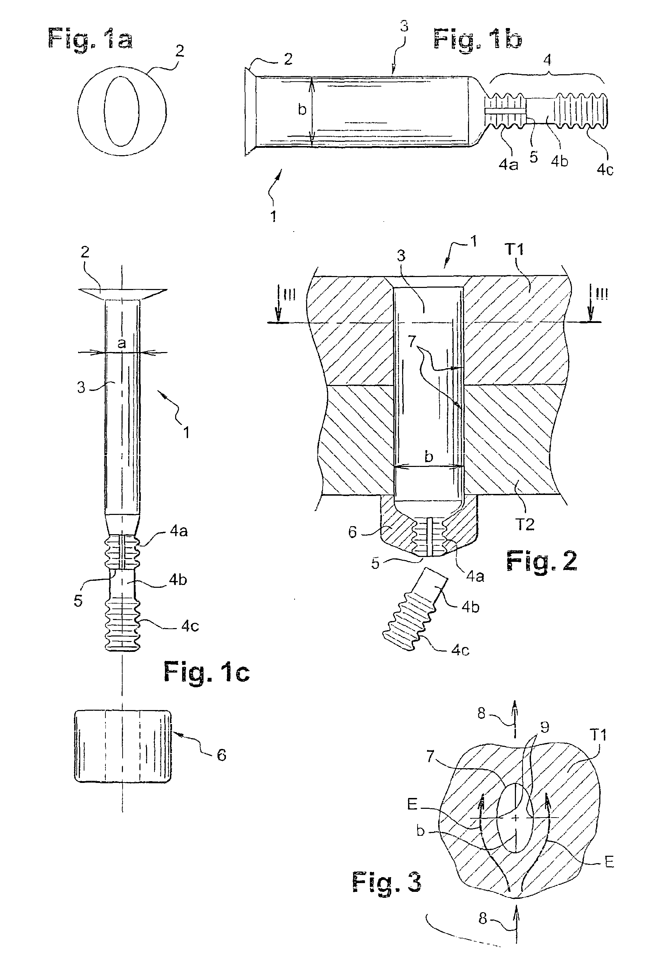

Sur les figures 1 a, 1b, 1c, on a représenté un rivet 1 conforme à l'invention.

Ce rivet 1 est d'un type général connu comprenant une tête fraisée 2 et un fût 3 prolongé axialement par une partie cylindrique 4 comprenant elle-même une zone à redans 4a attenante au fût 3, une zone intermédiaire lisse 4b séparée de la zone 4a par une entaille 5 de sectionnement de la partie 4 et enfin une zone terminale à redans 4c.

La partie 4 sert à la manière connue à mettre en place le rivet et à effectuer le rivetage à l'aide d'une bague annulaire 6.

Le rivet 1 selon l'invention est caractérisé par un fût 3 de section elliptique ou analogue, par exemple une section de petit axe a (figure 1c) égal à la moitié du grand axe b (figure 1b).

La figure 2 représente le rivet 1 assemblant deux tôles métalliques T1 et T2 dans lesquelles sont ménagés des trous 7 de même section que le fût 3 ou d'une section voisine si l'on souhaite monter les rivets avec interférence notamment positive.

Le rivet 1 est fixé par sertissage de la bague 6 sur l'extrémité 4a qui demeure en place, les parties 4b, 4c étant séparées par rupture au droit de l'entaille 5, le mode de mise en place d'un tel rivet étant bien connu.

La figure 3 représente une coupe de la tôle T1 dans le plan perpendiculaire au rivet 1 et suivant la ligne III-III de la figure 2.

En supposant que des efforts de traction sont appiiqués à la tôle T1, suivant la direction des flèches 8, c'est-à-dire parallèlement au grand axe b du trou 7, le fait d'allonger dans cette direction le trou 7 par son ovalisation assure une meilleure distribution des contraintes sur les flancs opposés 9 de part et d'autre du grand axe b du trou 7. Les contraintes générées par les flux d'efforts symbolisés par les flèches E se répartissent en effet sur une surface bien supérieure à ce qu'elle serait si le trou 7 était purement circulaire.

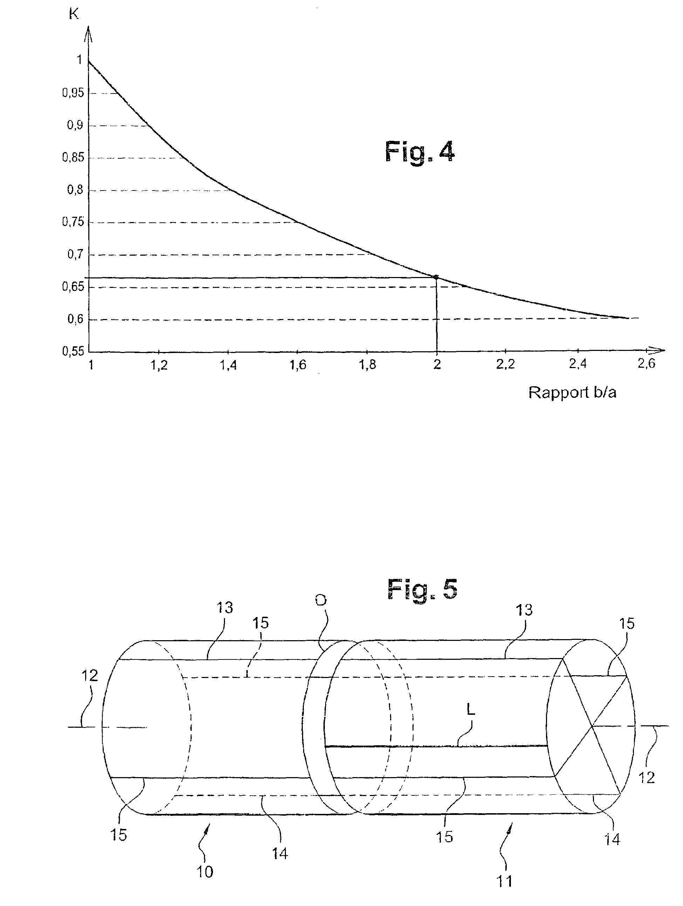

La figure 4 illustre l'évolution du rapport K entre la valeur du coefficient de concentration Kₜ (au droit des flancs des trous de rivet) pour un trou elliptique et la valeur de ce même coefficient mais pour un trou circulaire, en correspondance avec la déformation de la section des trous, depuis un trou de section purement circulaire (K = 1).

Sur la figure 4, sur l'axe des abscisses sont mentionnés les rapports b/a qui vont de 1 à 2, 6, cependant que sur l'axe des ordonnées sont mentionnées les valeurs de K allant de 0,55 jusqu'à 1 pour le trou circulaire.

Le rapport grand axe/petit axe (b/a) de 2 apparaît comme optimal et entraîne une réduction du coefficient K de l'ordre de 33% (K ≈ 0,67). On peut bien entendu s'écarter de cette valeur, au delà ou en deçà, en fonction de la nature de l'assemblage à réaliser.

Le rivet 1 de l'invention est particulièrement approprié à l'assemblage des tronçons d'un fuselage d'aéronef, ainsi que des éléments constitutifs de chaque tronçon.

Sur la figure 5, on a représenté schématiquement deux tronçons de fuselage, respectivement 10 et 11, à joindre selon une ligne de couture dite orbitale symbolisée en 0 constituée par un cercle ou analogue, selon la section du fuselage, dont le plan est perpendiculaire à l'axe longitudinal 12 du fuselage.

On a représenté en 13 sur la figure 5 la génératrice supérieure du fuselage, en 14 la génératrice inférieure et en 15 les deux génératrices situées dans le plan neutre de la poutre théorique constituée par le fuselage.

On a représenté enfin en L une couture dite longitudinale d'assemblage de deux éléments du tronçon 11, cette couture étant parallèle à l'axe 12 du fuselage, ou plus précisément confondue avec une génératrice dudit tronçon 11.

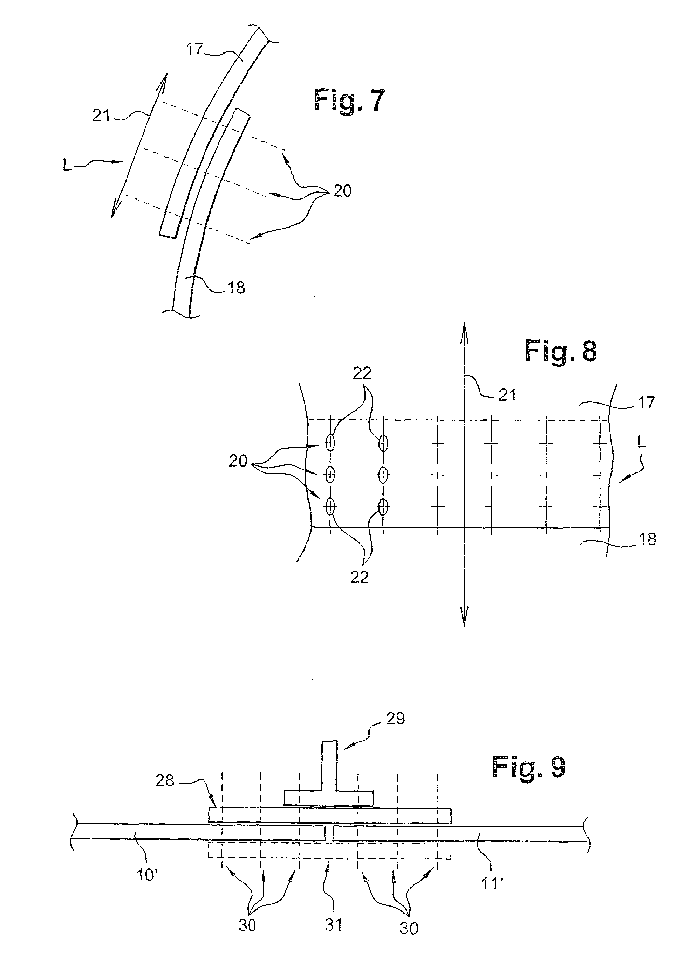

Sur les figures 7 et 8,est illustrée la réalisation d'une couture longitudinale telle que la couture L conformément à l'invention, à savoir en utilisant pour le rivetage le dispositif d'assemblage des figures 1a, 1b, 1c, 2 et 3.

Sur la figure 7, on a représenté, vue en coupe transversale, la couture L, les panneaux à abouter du tronçon considéré (11), généralement constitués de panneaux ou tôles par exemple métalliques, étant représentés en 17 et 18. L'assemblage est réalisé en mettant en recouvrement les bords en regard des panneaux 17, 18, trois séries de rivets 20 assemblant les bords en recouvrement desdits panneaux.

En 21 sur les figures 7 et 8, est représentée la direction des efforts de traction qui seront exercés ultérieurement sur le tronçon par la pressurisation de la cabine de l'aéronef, ces efforts s'exerçant perpendiculairement à la couture L.

Conformément à l'invention, les trous 22 de fixation de l'assemblage sont réalisés dans les panneaux 17, 18 avec une section elliptique ou analogue dont le grand axe est orthogonal à la couture L, c'est-à-dire parallèle à la direction des efforts 21 .

Par section elliptique ou analogue on entend une section purement elliptique ou une section ovale quelconque définissant un petit axe et un grand axe perpendiculaires entre eux.

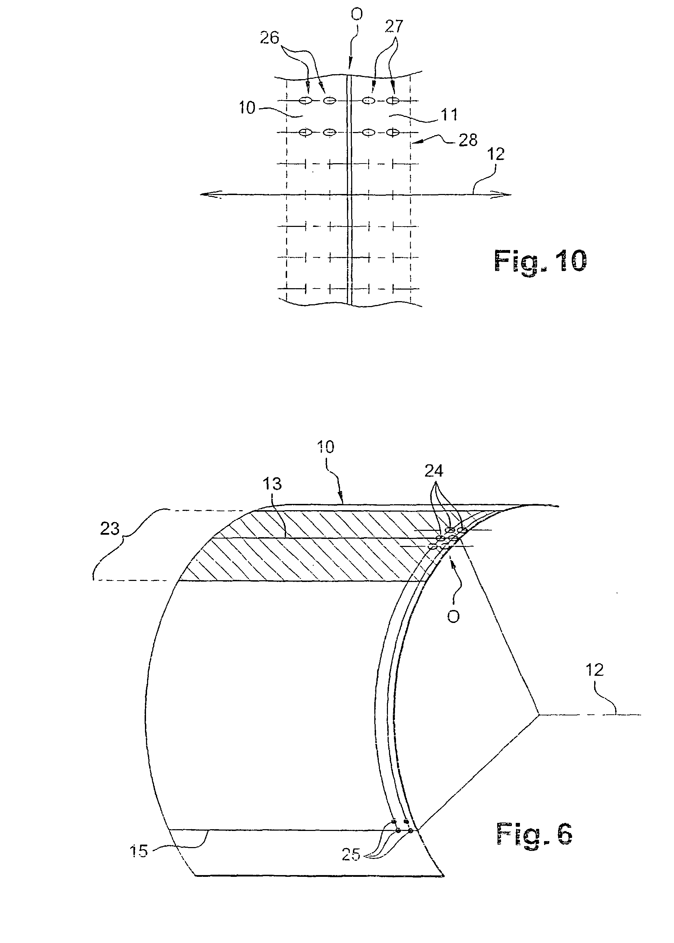

La figure 6 illustre l'application de l'invention à la réalisation d'une couture orbitale telle que la couture 0 de la figure 5.

Dans ce type de couture, les efforts exercés, en particulier de traction et de compression, sont concentrés dans des zones de fuselage chevauchant les génératrices supérieure 13 et inférieure 14 et parallèles à ces génératrices.

On a représenté sur la figure 6 une bande 23 à cheval sur la génératrice supérieure 13, correspondant à la zone de plus forte sollicitation du tronçon 10 et dans laquelle les trous 24 de fixation des tronçons aboutés seront, conformément à l'invention, de section elliptique ou analogue avec le grand axe parallèle à la génératrice 13. Il en va de même de manière symétrique pour la zone, analogue à la zone de la bande 23, de la génératrice inférieure 14.

La largeur de la bande 23 est plus ou moins importante. Il n'est pas nécessaire que tous les trous de fixation et les rivets de la couture orbitale 0 soient de section elliptique car plus on s'éloigne de la génératrice 13 en direction de la génératrice neutre 15, moins les efforts de traction/compression sont importants, ces derniers devenant même nuls théoriquement au droit de la génératrice 15. Ainsi, en dehors des zones 23, les trous et les rivets associés peuvent être de section conventionnelle circulaire comme les trous 25 représentés en figure 6.

Sur la figure 10, on a représenté en 0 une ligne de couture orbitale de jonction des deux tronçons 10 et 11 de la figure 5, la couture étant réalisée à l'aide, sur chaque tronçon, de deux rangées, 26 et 27, de moyens d'assemblage selon l'invention, à savoir des trous et rivets à section elliptique dont le grand axe est orthogonal à la couture 0, c'est-à-dire parallèle à l'axe longitudinal 12 du fuselage. En 28 est représentée une virole rapportée à cheval sur la couture O.

En comparaison, on a représenté en coupe en figure 9, une couture orbitale conventionnelle réalisée avec des trous et rivets de section circulaire.

En 10' et 11', sont représentés les tronçons à abouter. L'assemblage est obtenu à l'aide d'une virole 28 rapportée sur la paroi interne du fuselage à cheval sur la couture. En outre, généralement un cadre à section en T, représenté en 29, est disposé sur la face de la virole 28 opposée à la face en contact avec les bords de tronçons 10', 11'.

Ce mode d'assemblage impose généralement de prévoir pour chaque extrémité de tronçon trois rangées 30 de rivets conventionnels dont l'une solidarise également le cadre 29 avec la virole 28.

Une virole externe, telle que celle représentée en tiretés en 31, peut être nécessaire dans certaines zones très sollicitées (ou chargées) mécaniquement afin de la renforcer.

En remplacement de ce mode d'assemblage, l'invention permet, à performance égale en termes de résistance à la fatigue, soit une réduction du nombre de rangées de rivets de 3 à 2 comme illustré par la figure 10, soit une suppression de la virole externe 31.

On réalise ainsi un gain en poids, une simplification de l'assemblage et une réduction des coûts non seulement à la fabrication mais également dans l'exploitation commerciale de l'aéronef.

Il est enfin à noter que d'autres types de rivets ou analogues que celui représenté et décrit ci-dessus peuvent être utilisés dans la mesure où ils comportent un fût qui peut être conformé avec une section elliptique ou analogue.

Les trous elliptiques (22, 24, 26) peuvent être réalisés sans difficulté par perçage orbital, cependant que les fûts elliptiques des rivets ou analogues peuvent être également réalisés sans difficulté technique par usinage, matriçage ou moulage.

Si l'on souhaite monter les rivets avec interférence, notamment positive, on percera des trous (22, 24, 26) de section correspondant à celle des fûts de rivets (3) pour obtenir l'interférence recherchée.

Bien entendu, le dispositif d'assemblage décrit est représenté en figure 2 peut être utilisé pour d'autres assemblages que des tronçons ou des éléments de tronçon de fuselage d'aéronefs, dans la mesure où les éléments à assembler sont soumis à des efforts notamment de traction/compression s'exerçant dans une direction privilégiée perpendiculaire à l'axe des trous de fixation, laquelle direction serait celle d'orientation du grand axe des sections des trous et rivets associés desdits assemblages.

Par ailleurs, le procédé de l'invention s'applique à l'assemblage de panneaux de tous types de tôles et tout particulièrement des tôles métalliques, des tôles en matériau composite et des tôles du type FML (Fiber Metal Laminate), constitué d'une tôle laminée comportant à la fois au moins une couche de métal et au moins une couche de fibres de verre.

## Revendications

1. Dispositif d'assemblage comprenant plusieurs éléments (T1, T2) assemblés par rivetage **caractérisé en ce qu'**il comprend des rivets (1) dont le fût (3) présente une section elliptique, reçus et rivetés dans des trous (7) de section elliptique correspondant à celle dudit fût (3), lesdits trous (7) étant ménagés dans lesdits éléments à assembler.

2. Dispositif selon la revendication 1, **caractérisé en ce que** le rapport grand axe/petit axe de la section elliptique desdits rivets (1) et trous (7) est de l'ordre de 2.

3. Procédé d'assemblage de panneaux de tôles de relativement grandes dimensions et faible épaisseur pour constituer le fuselage d'un aéronef, lequel fuselage comprend des tronçons annulaires (10, 11) aboutés suivant des coutures orbitales (0), lesdits tronçons (10, 11) étant constitués chacun d'un ou plusieurs panneaux aboutés suivant des coutures longitudinales (L), ledit procédé étant **caractérisé en ce que**, d'une part, sur chaque tronçon (10, 11) la ou les coutures longitudinales sont réalisées en disposant des bords des deux panneaux (17, 18) à assembler en recouvrement, l'assemblage des parties en recouvrement étant réalisé par perçage dans lesdites parties de trous (22) de section elliptique dont le grand axe est orthogonal à la couture longitudinale (L), puis rivetage desdites parties à l'aide de rivets (1) à fût (3) de section elliptique correspondant à celle desdits trous (22) et, d'autre part, chaque couture orbitale (O) de jonction deux à deux desdits tronçons est réalisée à l'aide d'une virole (28) rapportée sur la paroi interne du fuselage, en regard des parties aboutées (10', 11') des tronçons, l'assemblage de la virole (28) et des tronçons en regard étant réalisé par rivetage, ledit rivetage étant, au moins dans deux zones (23) opposées des coutures orbitales (0) à cheval sur les génératrices supérieure (13) et inférieure (14) du fuselage, effectué par perçage de trous (24, 26) de section elliptique de grand axe parallèle auxdites génératrices (13, 14) et mise en place de rivets (1) à fût (3) à section elliptique correspondant à celle desdits trous (24, 26).

4. Procédé selon la revendication 3, **caractérisé en ce que** lesdits trous (22, 24, 26) et lesdits fûts (3) des rivets (1) sont réalisés avec une section elliptique dont le rapport grand axe/petit axe est de l'ordre de 2.

5. Procédé selon la revendication 3 ou 4, **caractérisé en ce que** lesdits trous (22, 24, 26) sont percés avec une section en correspondance avec celle des fûts de rivets (3) pour obtenir un montage des rivets avec interférence.

6. Procédé selon la revendication 3, **caractérisé en ce que** les tôles constitutives desdits panneaux sont choisies dans le groupe comprenant les tôles métalliques, les tôles en matériau composite et les tôles laminées comportant à la fois au moins une couche de métal et au moins une couche de fibres de verre.

## Claims

1. An assembly device comprising several elements (T1, T2) assembled by riveting, **characterised in that** it comprises rivets (1), the shank (3) of which has a elliptical cross-section, received and riveted in holes (7) of elliptical cross-section corresponding to that of said shank (3), said holes (7) being formed in said elements to be assembled.

2. A device according to claim 1, **characterised in that** the ratio between the major axis and the minor axis of the elliptical cross-section of said rivets (1) and holes (7) is around 2.

3. A method of assembling thin, relatively large sheet panels to form the fuselage of an aircraft, such fuselage comprising annular portions (10, 11) abutted along orbital seams (0), said portions (10, 11) each being formed of one or more panels abutted along longitudinal seams (L), said method being **characterised in that** on the one hand, on each portion (10, 11), the longitudinal seam or seams are produced by disposing edges of the two panels (17, 18) to be assembled in overlap, the assembly of the overlapping parts being achieved by piecing in said parts holes (22) with an elliptical cross-section, the major axis of which is orthogonal to the longitudinal seam (L), and then riveting said parts by means of rivets (1) with a shank (3) of elliptical cross-section corresponding to that of said holes (22), and on the other hand each orbital seam (0) joining said portions in pairs is produced by means of a hoop (28) attached to the internal wall of the fuselage, opposite the abutted parts (10' 11') of the portions, the assembly of the hoop (28) and the facing portions being achieved by riveting, said riveting being performed, at least in two opposite zones (23) of the orbital seams (O) straddling the top (13) and bottom (14) generatrices of the fuselage, by piercing holes (24, 26) of elliptical cross-section and with the major axis parallel to said generatrices (13, 14) and fitting rivets (1) with a shank (3) of elliptical cross-section corresponding to that of said holes (24, 26).

4. A method according to claim 3, **characterised in that** said holes (22, 24, 26) and said shanks (3) of the rivets (1) are produced with an elliptical cross-section where the ratio between the major axis and the minor axis is around 2.

5. A method according to claim 3 or 4, **characterised in that** said holes (22, 24, 26) are pierced with a cross-section matching that of the rivet shanks (3) in order to obtain mounting of the rivets with interference.

6. A method according to claim 3, **characterised in that** the sheets constituting said panels are chosen from the group comprising metal sheets, sheets made from composite material and laminated sheets comprising both at least one layer of metal and at least one layer of glass fibres.

## Patentansprüche

1. Verbindung, umfassend mehrere durch Nietung verbundene Elemente (T1, T2), **dadurch gekennzeichnet, dass** die Verbindung Nieten (1) umfasst, deren Schäfte (3) einen elliptischen Querschnitt aufweisen, und die in Löcher (7) mit elliptischem Querschnitt, die in den zusammenzufügenden Elementen angebracht sind, aufgenommen und vernietet sind, wobei der Querschnitt der Löcher dem der Schäfte der Nieten entspricht.

2. Verbindung nach Anspruch 1, **dadurch gekennzeichnet, dass** das Verhältnis zwischen großer Achse und kleiner Achse des elliptischen Querschnitts der Nieten (1) und der Löcher (7) im Bereich von 2 liegt.

3. Verfahren zum Verbinden von Schalen aus Blechen von relativ großen Abmessungen und geringer Dicke zum Erstellen des Rumpfes eines Luftfahrzeugs, der ringförmige Abschnitte (10, 11) umfasst, die an umlaufenden Nähten (O) aneinandergefügt sind, wobei die Abschnitte (10, 11) jeweils bestehen aus einer oder mehreren Schalen, die aneinandergefügt sind entlang longitudinaler Nähte (L), **dadurch gekennzeichnet, dass** einerseits auf jedem Abschnitt (10, 11) an der Stelle der longitudinalen Nähte, die durch Anordnung der Ränder der beiden zusammenzufügenden Bleche (17, 18) in Überdeckung erzeugt werden, die Zusammenfügung der überdeckenden Abschnitte realisiert wird durch Bohrung von Löchern (22) mit elliptischem Querschnitt, deren große Achse orthogonal zur longitudinalen Naht (L) verläuft, und anschließende Vernietung der genannten Abschnitte mit Hilfe von Nieten (1) mit Schaft (3) mit elliptischem Querschnitt, der demjenigen der Löcher (22) entspricht, und andererseits jede umlaufende Naht (O) der paarweisen Verbindung der Abschnitte realisiert wird mit Hilfe einer Zwinge (28), die angebracht wird auf der inneren Wand des Rumpfes gegenüber den Verbindungsbereichen (10', 11') der Abschnitte, wobei die Zusammenfügung der Zwinge (28) und der benachbarten Abschnitte realisiert wird durch Nietung, und wobei die Nietung mindestens in zwei gegenüberliegenden Zonen (23) der umlaufenden Nähte (0) rittlings auf den oberen Erzeugenden (13) und unteren Erzeugenden (14) des Rumpfes ausgeführt wird durch Bohrung von Löchern (24, 26) mit elliptischem Querschnitt mit der großer Achse parallel zu den Erzeugenden (13, 14) und Einsetzen von Nieten (1) mit Schaft (3) mit elliptischem Querschnitt, der dem der Löcher (24, 26) entspricht.

4. Verfahren nach Anspruch 3, **dadurch gekennzeichnet, dass** die Löcher (22, 24, 26) und die Schäfte (3) der Nieten (1) mit elliptischem Querschnitt ausgeführt sind, dessen Verhältnis zwischen großer und kleiner Achse im Bereich von 2 liegt.

5. Verfahren nach Anspruch 3 oder 4, **dadurch gekennzeichnet, dass** die Löcher (22, 24, 26) mit einem Querschnitt gebohrt sind, der dem der Schäfte der Nieten (3) entspricht, um eine Montage der Nieten in Übereinstimmung zu erreichen.

6. Verfahren nach Anspruch 3, **dadurch gekennzeichnet, dass** die Bleche, die die Schalen bilden, ausgewählt sind aus der Gruppe umfassend metallische Bleche, Bleche aus Kompositmaterial und laminierte Bleche, die wenigstens eine Metallschicht und mindestens eine Glasfaserschicht aufweisen.
